# EUROPEAN PATENT APPLICATION

(11) **EP 4 760 642 A1**
(43) Date of publication of application: **17.06.2026**
(21) Application number: 24910121.3
(22) Date of filing: 08.10.2024
(51) Int. Cl.: G06T 15/20

(54) **LIGHTING RENDERING METHOD AND APPARATUS, AND COMPUTER DEVICE, COMPUTER-READABLE STORAGE MEDIUM AND COMPUTER PROGRAM PRODUCT**

(30) Priority: 25.12.2023 CN 202311801116
(71) Applicant: Tencent Technology (Shenzhen) Company Limited, Shenzhen, Guangdong 518057 (CN)
(72) Inventor: YIN, Xiaojie, Shenzhen, Guangdong 518057 (CN)
(74) Representative: Gunzelmann, Rainer
(86) International application number: PCT/CN2024/123430
(87) International publication number: WO 2025/139179

(57) **Abstract**

This application relates to a light rendering method and apparatus, a computer device, a computer-readable storage medium, and a computer program product. The method may be applied to technologies such as artificial intelligence and intelligent transportation. The method includes: performing light effect detection on a rendered image, to obtain a detection result (202); when the detection result indicates that a first object vertex that does not meet a light rendering condition exists in the rendered image, obtaining, along a light path on which the first object vertex is located, light information of a second object vertex that is in the rendered image and that meets the light rendering condition (204); training a neural network based on the light information of the second object vertex, to obtain a trained neural network (206); extracting light information of object vertexes including the first object vertex in a to-be-rendered image by using the trained neural network, to obtain the light information of the object vertexes (208); and performing light rendering on the to-be-rendered image based on the light information of the object vertexes (210).

## Description

### RELATED APPLICATION

This application claims priority to Chinese Patent Application No. 2023118011160, filed with the China National Intellectual Property Administration on December 25, 2023 and entitled "LIGHT RENDERING METHOD AND APPARATUS, COMPUTER DEVICE, STORAGE MEDIUM, AND PROGRAM PRODUCT".

### FIELD OF THE TECHNOLOGY

This application relates to the field of artificial intelligence technologies, and in particular, to a light rendering method and apparatus, a computer device, a computer-readable storage medium, and a computer program product.

### BACKGROUND OF THE DISCLOSURE

With development of image processing technologies, a light rendering technology is widely applied to the fields such as games, movies, and virtual reality, and is configured for achieving a light effect in a related scenario, so as to greatly improve realism of the scenario.

In a conventional light rendering solution, cached light information is usually obtained by using a radiance cache technology, and then light rendering is performed by using the cached light information. In some application scenarios, because a position and a posture of each object dynamically change, or a viewing angle during image display dynamically changes, light information on a surface of the object also dynamically changes. In this case, performing light rendering by using the cached light information may cause a poor light rendering effect.

### SUMMARY

According to various embodiments of this application, a light rendering method and apparatus, a computer device, a computer-readable storage medium, and a computer program product are provided.

According to a first aspect, this application provides a light rendering method, performed by a computer device, the method including:
before performing light rendering on a to-be-rendered image, performing light effect detection on a rendered image, to obtain a detection result, the rendered image being a previous image frame of the to-be-rendered image;
in response to the detection result indicating that a first object vertex that does not meet a light rendering condition exists in the rendered image, obtaining, along a light path on which the first object vertex is located, light information of a second object vertex that is in the rendered image and that meets the light rendering condition;
training a neural network using the light information of the second object vertex, to obtain a trained neural network;
extracting light information of object vertexes including the first object vertex in the to-be-rendered image by using the trained neural network, to obtain the light information of the object vertexes; and
performing light rendering on the to-be-rendered image based on the light information of the object vertexes.

According to a second aspect, this application further provides a light rendering apparatus, the apparatus including:
a detection module, configured to: before performing light rendering on a to-be-rendered image, perform light effect detection on a rendered image, to obtain a detection result, the rendered image being a previous image frame of the to-be-rendered image;
a searching module, configured to: in response to the detection result indicating that a first object vertex that does not meet a light rendering condition exists in the rendered image, obtain, along a light path on which the first object vertex is located, light information of a second object vertex that is in the rendered image and that meets the light rendering condition;
a training module, configured to train a neural network using the light information of the second object vertex, to obtain a trained neural network;
an extraction module, configured to extract light information of object vertexes including the first object vertex in the to-be-rendered image by using the trained neural network, to obtain the light information of the object vertexes; and
a rendering module, configured to perform light rendering on the to-be-rendered image based on the light information of the object vertexes.

In an embodiment, the first object vertex includes a first-level intersection point, a second-level intersection point, and a third-level intersection point. The searching module is configured to: determine the first-level intersection point intersecting a direct light ray of a light source in the rendered image; generate a first secondary-level light ray at the first-level intersection point, and determine a point intersecting the first secondary-level light ray in the rendered image, to obtain the second-level intersection point; generate a second secondary-level light ray at the second-level intersection point, and determine a point intersecting the second secondary-level light ray in the rendered image, to obtain the third-level intersection point; generate a light path including the first-level intersection point, the second-level intersection point, and the third-level intersection point; and obtain, along the light path, the light information of the second object vertex that is in the rendered image and that meets the light rendering condition.

In an embodiment, the searching module is further configured to: generate an initial path based on the first-level intersection point, the second-level intersection point, and the third-level intersection point; perform path extension on the initial light path, to obtain an extended path; and search, along the extended path, for the second object vertex that is in the rendered image and that meets the light rendering condition.

In an embodiment, the apparatus further includes:
a first obtaining module, configured to obtain a pre-configured first quantity of light ray reflection times; and
a determining module, configured to determine a vertex search quantity based on the first quantity of light ray reflection times and a quantity of first object vertexes.

The searching module is further configured to: search, along the light path based on the vertex search quantity, for the second object vertex that is in the rendered image and that meets the light rendering condition.

In an embodiment, the apparatus further includes:
a display module, configured to display a configuration page of an interactive application; and
a configuration module, configured to: configure a quantity of light ray reflection times on the configuration page in response to a first configuration operation triggered on the configuration page; and configure a radiance cache on/off state on the configuration page in response to a second configuration operation triggered on the configuration page.

In an embodiment, the detection module is further configured to: obtain the configured radiance cache on/off state; and when the radiance cache on/off state is a radiance cache on state, perform light effect detection on the rendered image, to obtain the detection result.

The first obtaining module is further configured to: when the radiance cache on/off state is a radiance cache off state, obtain cached light information of each object vertex in the to-be-rendered image.

The rendering module is further configured to perform light rendering on the to-be-rendered image based on the cached light information of each object vertex in the to-be-rendered image.

In an embodiment, the extraction module is further configured to extract the light information of each object vertex in the to-be-rendered image by using the neural network in response to the detection result indicating that all object vertexes in the rendered image meet the light rendering condition.

The rendering module is further configured to perform light rendering on the to-be-rendered image based on the light information of each object vertex in the to-be-rendered image.

In an embodiment, the rendering module is further configured to train at least two sub-networks based on the light information of the second object vertex, to obtain at least two trained sub-networks, the at least two sub-networks being obtained by performing structural splitting on the neural network.

In an embodiment, there are at least two second object vertexes, and the apparatus further includes:
a second obtaining module, configured to obtain geometry information of the at least two second object vertexes.

The training module is further configured to: input light information and geometry information of each second object vertex into each sub-network, to enable each sub-network to generate predicted light information of each second object vertex based on the inputted geometry information; and perform parameter optimization on each sub-network based on a loss value between the predicted light information and the light information of each second object vertex.

In an embodiment, the extraction module is further configured to: obtain a pre-configured second quantity of light ray reflection times, a pre-configured quantity of light ray refraction times, and a pre-configured quantity of light ray scattering times; and extract the light information of the object vertexes including the first object vertex in the to-be-rendered image based on the second quantity of light ray reflection times, the quantity of light ray refraction times, and the quantity of light ray scattering times, the light information including direct light information, reflected light information, refracted light information, and scattered light information.

According to a third aspect, this application further provides a computer device. The computer device includes a memory and a processor, the memory having a computer program stored therein, and the processor implementing operations of the light rendering method when executing the computer program.

According to a fourth aspect, this application further provides a computer-readable storage medium. The computer-readable storage medium has a computer program stored therein, and operations of the light rendering method are implemented when the computer program is executed by a processor.

According to a fifth aspect, this application further provides a computer program product. The computer program product includes a computer program, and operations of the light rendering method are implemented when the computer program is executed by a processor.

Details of one or more embodiments of this application are provided in the accompanying drawings and descriptions below. Other features and advantages of this application become clear with reference to the specification, the accompanying drawings, and the claims.

### BRIEF DESCRIPTION OF THE DRAWINGS

FIG. 1 is a diagram of an application environment of a light rendering method according to an embodiment;
FIG. 2 is a schematic flowchart of a light rendering method according to an embodiment;
FIG. 3 is a diagram of a light path according to an embodiment;
FIG. 4 is a diagram of a light path according to another embodiment;
FIG. 5a is a diagram of a structure of a neural network according to an embodiment;
FIG. 5b is a diagram of a structure of a sub-network obtained by performing structural splitting on a neural network according to an embodiment;
FIG. 6 is a diagram of dividing a rendered image into a plurality of areas according to an embodiment;
FIG. 7 is a diagram of comparison between results obtained by performing rendering by using different light rendering methods according to an embodiment;
FIG. 8 is a diagram of comparison between results obtained by performing rendering by using different light rendering methods according to another embodiment;
FIG. 9 is a diagram of comparison between results obtained by performing rendering by using different light rendering methods according to another embodiment;
FIG. 10 is a schematic flowchart of operations of extracting light information according to an embodiment;
FIG. 11 is a diagram of a page of configuring a light rendering parameter according to an embodiment;
FIG. 12 is a block diagram of a structure of a light rendering apparatus according to an embodiment;
FIG. 13 is a block diagram of a structure of a light rendering apparatus according to an embodiment; and
FIG. 14 is a diagram of an internal structure of a computer device according to an embodiment.

### DESCRIPTION OF EMBODIMENTS

To make the objectives, technical solutions, and advantages of this application clearer, the following further describes this application in detail with reference to the accompanying drawings and embodiments. The specific embodiments described herein are merely used to explain this application, and are not used to limit this application.

In the following descriptions, related terms "first, second, and third" are merely intended to distinguish between similar objects, and do not indicate a particular order for the objects. Particular orders or precedence orders of the "first, second, and third" may be exchanged as permitted, so that all embodiments of this application described herein can be implemented in orders other than the order shown or described herein.

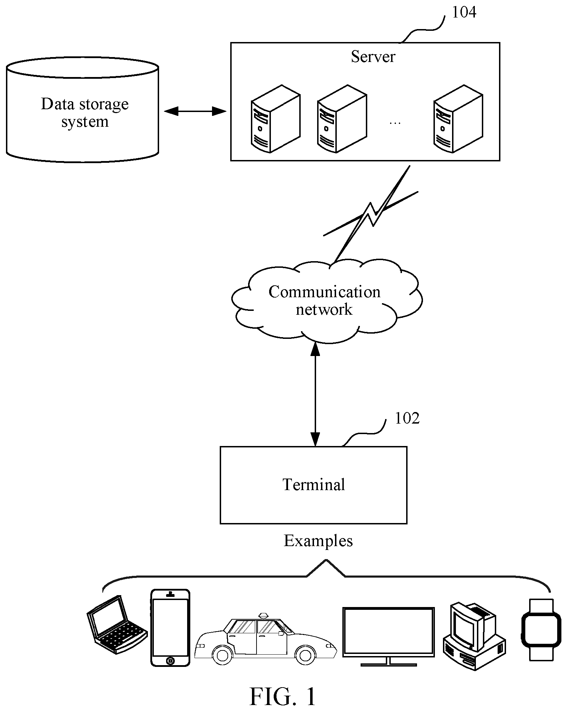

A light rendering method provided in all embodiments of this application may be applied to an application environment shown in FIG. 1. A terminal 102 communicates with a server 104 via a network. A data storage system may store data that the server 104 needs to process, such as rendered or to-be-rendered image data. The data storage system may be integrated onto the server 104, or may be placed on a cloud or another network server.

The terminal 102 may be a smartphone, a tablet computer, a notebook computer, a desktop computer, an internet of things device, or a portable wearable device. The internet of things device may be a smart speaker, a smart television, an intelligent air conditioner, an intelligent vehicle-mounted device, or the like. The portable wearable device may be a smart watch, a head-mounted device, or the like.

The server 104 may be an independent physical server, or may be a service node in a block chain system. Service nodes in the block chain system form a peer-to-peer network. A peer-to-peer protocol is an application-layer protocol running over a transmission control protocol (TCP).

In addition, the server 104 may alternatively be a server cluster including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The terminal 102 may be connected to the server 104 in a communication connection manner such as Bluetooth, a universal serial bus (USB), or a network. This is not limited in this application.

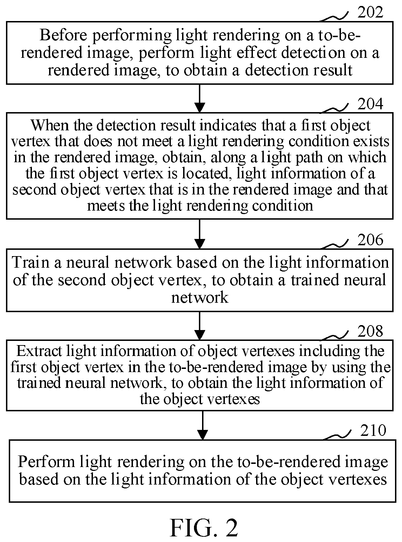

In an embodiment, as shown in FIG. 2, a light rendering method is provided. The method may be performed by a computer device, for example, performed by the server or terminal in FIG. 1, or cooperatively performed by the server and the terminal. An example in which the method is performed by the terminal in FIG. 1 is used for description, and the method includes the following operations.

202: Before performing light rendering on a to-be-rendered image, perform light effect detection on a rendered image, to obtain a detection result.

The to-be-rendered image may be at least one image on which image rendering needs to be performed, and may be an image that currently needs to be displayed and that is not rendered, or a video frame that currently needs to be played and that is not rendered. In some actual application, the to-be-rendered image may be a to-be-rendered game image in a game scenario, a to-be-rendered virtual reality image in a virtual reality scenario, a to-be-rendered augmented reality image in an augmented reality scenario, or a to-be-rendered extended reality image in an extended reality scenario.

The rendered image may be at least one image on which rendering has been completed, and is a previous image frame of the to-be-rendered image. Specifically, the rendered image may be an image that is being displayed (or has been displayed) after rendering is completed, or a video frame that is being played (or has been played) after rendering is completed. In actual application, the rendered image may be a rendered game image in the game scenario, a rendered virtual reality image in the virtual reality scenario, a rendered augmented reality image in the augmented reality scenario, or a rendered extended reality image in the extended reality scenario. The to-be-rendered image and the rendered image may be different frames of images in a same scenario, for example, may be different frames of images in a same game scenario.

A light effect may be a rendering effect of light, and may be referred to as a light rendering effect or a lighting effect. Therefore, light effect detection may mean detecting the light rendering effect. The detection result may be a result indicating that a global or local light rendering effect of the rendered image is good or poor. For example, when an abnormal image parameter such as overbrightness, excessive darkness, or excessive noises occurs on an object (for example, a virtual character or a virtual object in a game) in the rendered image, a light rendering effect of the object is poor, affecting a visual effect. In this case, the object (including each object vertex of the object) does not meet a light rendering condition.

The light rendering method in this application may be applied to the game scenario, the virtual reality scenario, the augmented reality scenario, the extended reality scenario, and the like. In the foregoing scenarios, in an image rendering (including light rendering) process, light information of a corresponding object vertex in the rendered image may be used to guide training of a neural network, and then light information of each object vertex in the to-be-rendered image is extracted by using a trained neural network, to achieve a light effect of the to-be-rendered image through rendering. In other words, in the light rendering method in this application, an initialized neural network may be directly used in the image rendering process, network training is performed in the rendering process, and the neural network may not need to be pre-trained. In addition, before the neural network is used in image rendering, the neural network may alternatively be pre-trained. In this case, light rendering may also be accurately performed on the first several frames of images.

In an embodiment, to ensure the light rendering effect of the subsequent to-be-rendered image, the terminal may first perform light effect detection on the rendered image before performing light rendering on the to-be-rendered image. For example, the terminal detects at least one image parameter of a noise quantity of each object, a brightness degree of each object, or a contrast ratio between a surrounding environment and each object in the rendered image, to obtain the detection result. Therefore, whether a light rendering effect of the rendered image can meet a requirement (that is, the light rendering condition) may be determined based on the detection result, to determine whether the neural network needs to be trained. This helps improve the light rendering effect of the to-be-rendered image, and also helps ensure smoothness of image display in the rendering process.

For example, for the game scenario, in a process in which a user plays a game, it is assumed that the terminal has completed rendering game video frames a to c. To ensure a light rendering effect of a subsequent game video frame (for example, a to-be-rendered game video frame d), in this case, light effect detection is performed on the game video frames a to c, to obtain a detection result, so as to determine, based on the detection result, whether the neural network needs to be trained. In this way, the light rendering effect of the game video frame d can be ensured.

In an embodiment, the terminal may first determine whether light effect detection needs to be performed on the rendered image. When light effect detection needs to be performed, the terminal performs light effect detection on the rendered image, to obtain the detection result. Specifically, the terminal may first obtain a configured radiance cache on/off state; determine, based on the radiance cache on/off state, whether light effect detection needs to be performed; and when the radiance cache on/off state is a radiance cache on state, perform light effect detection on the rendered image, to obtain the detection result. Whether to perform light rendering in a neural radiance cache (NRC) manner is determined in a manner of configuring the radiance cache on/off state. This can help select different rendering manners based on different requirements, to meet requirements of different users. For example, a user having a high requirement on image quality may choose to turn on the radiance cache, and this helps obtain an image with high realism through rendering.

For example, when the radiance cache on/off state is the radiance cache on state, light brightness, light-dark contrast, a shadow effect, a radiance, and the like in the rendered image are detected. For example, brightness of an unblocked area is clearly higher than brightness of a blocked area. In addition, light rays shine on one side of an object, and a shadow occurs in a corresponding area on the other side. Therefore, light brightness of the two areas and whether corresponding shadow effects are proper may be detected, to obtain the detection result.

In addition, for a user having a high refresh rate (or a high requirement on smoothness), the user may choose to turn off the NRC. Therefore, when the radiance cache on/off state is a radiance cache off state, the terminal may obtain cached light information of each object vertex in the to-be-rendered image; and perform light rendering on the to-be-rendered image based on the cached light information of each object vertex in the to-be-rendered image, to effectively ensure a requirement for high image smoothness when the refresh rate is high.

204: In response to the detection result indicating that a first object vertex that does not meet the light rendering condition exists in the rendered image, obtain, along a light path on which the first object vertex is located, light information of a second object vertex that is in the rendered image and that meets the light rendering condition.

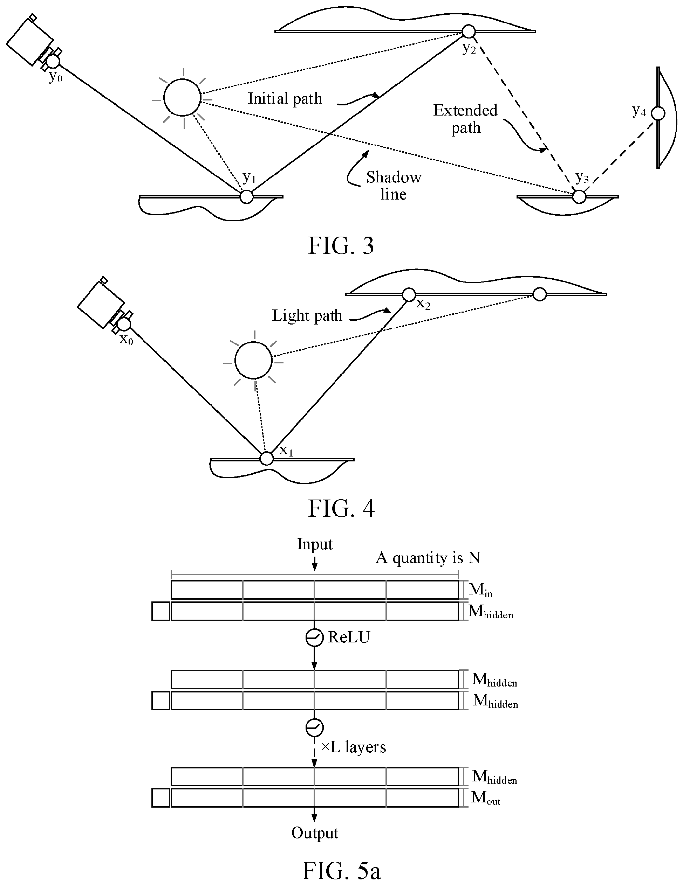

The first object vertex may be a vertex of an object, a quantity of first object vertexes may be m, and m is a positive integer greater than or equal to 1. In addition, the second object vertex may also be a vertex of the object, a quantity of second object vertexes may be n, and n is a positive integer greater than or equal to 1. As shown in FIG. 3, the first object vertexes may be *y*₀, *y*₁, and *y*₂, and the second object vertexes may be *y*₃ and *y*₄.

The object mentioned above may be a person, an animal, a plant, an item, a building, or the like displayed in an image. In some scenarios, the object is presented in the image by capturing images of real objects in the real world. In some special scenarios, the object may be a virtual object. For example, in the game scenario, the object may be a game object in the game scenario, including a virtual character (for example, a game character controlled by the user), a virtual animal (for example, a game monster or a game character controlled by the user), a virtual plant, a virtual item, a virtual building, or the like.

A light path may be a path formed by a light ray propagating between objects, and includes a path formed in at least one of propagation manners of direct transmission, reflection, refraction, or scattering of the light ray between the objects. Correspondingly, the light path on which the first object vertex is located may be a light path including the first object vertex, and may further include another object vertex (for example, the second object vertex). As shown in FIG. 3, the light path may be a path including *y*₀*, y*₁, *y*₂, *y*₃, and *y*₄. The light path includes the first object vertexes *y*₀, *y*₁, and *y*₂, and further includes the second object vertexes *y*₃ and *y*₄.

The light rendering condition may also be referred to as a light rendering requirement. Correspondingly, that the first object vertex does not meet the light rendering condition may mean that a light rendering effect of the first object vertex does not meet the light rendering condition, for example, at least one of the following cases: A noise quantity is greater than a preset quantity, brightness is greater than preset brightness, darkness is greater than preset darkness, or a contrast is less than a preset contrast.

The light information may be information indicating a radiance, a color, and a light type of light. Light information of different light types may include direct light information, reflected light information, refracted light information, and scattered light information. The radiance may be a physical quantity for describing light intensity and direction distribution, and is configured for measuring energy of light passing through a unit area on a surface of an object in a given direction.

That the first object vertex does not meet the light rendering condition indicates that the first object vertex is not learned by the neural network. To be specific, the neural network does not learn how to extract light information that is of the first object vertex and that meets the light rendering condition. For example, the neural network does not learn how to extract, from an initial path (that is, an initial light path) formed by the first object vertex, the light information that is of the first object vertex and that meets the light rendering condition.

In an embodiment, in response to the detection result indicating that the first object vertex that does not meet the light rendering condition exists in the rendered image, the terminal may obtain, by using a path tracing algorithm, the light information of the second object vertex that meets the light rendering condition. To be specific, the terminal simulates reflection, refraction, and scattering of a light ray between objects in an environment in the rendered image, to obtain light information of each vertex on a surface of an object on the light path on which the first object vertex is located. Therefore, accurate light information can be obtained by using the foregoing path tracing algorithm, and a complex light effect can be accurately simulated in the rendering process. For example, a shadow, indirect light, a color, and transparency in a complex game scenario can be simulated.

That the first object vertex does not meet the light rendering condition indicates that the first object vertex is not learned by the neural network. In this case, the light information that meets the light rendering condition and that is of the second object vertex on the same light path as the first object vertex is obtained, to train the neural network by using the light information of the second object vertex, so that the neural network learns the first object vertex.

In another embodiment, in response to the detection result indicating that all object vertexes in the rendered image meet the light rendering condition, the light information of each object vertex in the to-be-rendered image is extracted by using the neural network. Light rendering is performed on the to-be-rendered image based on the light information of each object vertex in the to-be-rendered image. Therefore, when all the object vertexes meet the light rendering condition, the neural network does not need to be trained, and light rendering is directly performed on the to-be-rendered image by using the light information that is of each object vertex and that is extracted by using the neural network, to effectively ensure smoothness of display of each image frame.

When all the object vertexes meet the light rendering condition, it indicates that the first object vertex is learned by the neural network. To be specific, the neural network learns how to extract the light information that is of the first object vertex and that meets the light rendering condition. For example, the neural network has learned how to extract, from the initial path, the light information that is of the first object vertex and that meets the light rendering condition.

Therefore, when all the object vertexes meet the light rendering condition, the terminal may not need to train the neural network. The terminal directly determines the light information of each object vertex in the to-be-rendered image by using light information of each object vertex in the rendered image, and then performs light rendering on the to-be-rendered image by using the light information of each object vertex in the to-be-rendered image. For example, object vertexes in FIG. 4 are object vertexes *x*₀*, x*₁, and *x*₂ in the rendered image. The light information of each object vertex in the to-be-rendered image is inferred based on the object vertexes *x*₀, *x*₁, and *x*₂ in the rendered image, and then light rendering is performed on the to-be-rendered image. For the game scenario, smoothness of display of each frame of game image can be ensured. In addition, for the virtual reality scenario, the augmented reality scenario, and the extended reality scenario, smoothness of display of each frame of scenario image can also be ensured.

206: Train the neural network using the light information of the second object vertex, to obtain the trained neural network.

The neural network may be a multi-layer perceptron (MLP) network. For example, as shown in FIG. 5a, in a neural network exemplarily shown in FIG. 5a, *Mᵢₙ* is an input layer, *M_{hidden}* is a hidden layer (namely, a perception layer), *Mₒᵤₜ* is an output layer, and ReLU is an activation function.

The trained neural network may be a neural network obtained by performing training based on the light information of the second object vertex in the previous frame of rendered image of the to-be-rendered image, or may be a neural network obtained by performing training based on light information of second object vertexes in a plurality of rendered images.

In an embodiment, the terminal may obtain geometry information of the second object vertex, and train the neural network by using the geometry information and the light information of the second object vertex, to obtain the trained neural network. It is to be emphasized that, when the neural network is trained, training is performed by using only the light information and the geometry information of the second object vertex on the light path on which the first object vertex is located, instead of geometry information and light information of all object vertexes in the rendered image, so that a training speed can be effectively increased, and training time can be greatly shortened, thereby meeting a requirement on real-time rendering of the to-be-rendered image.

The geometry information may include at least one of a position of the second object vertex, surface roughness, a propagation direction of a light ray at a vertex, and a surface normal vector, a diffuse vector, or a specular vector at the vertex.

The position may be represented by using three-dimensional coordinates. To enable an MLP to obtain a better light information extraction effect, before information is inputted into the neural network, a coordinate value of each dimension of the three-dimensional coordinates is extended to 12 dimensions through trigonometric function encoding, to obtain a position of 36 dimensions. The surface roughness is a one-dimensional vector, and is extended to four dimensions through identity encoding. The propagation direction of the light ray at the geometrical vertex is a two-dimensional vector, and is extended to eight dimensions through identity encoding. The surface normal vector at the geometrical vertex is a two-dimensional vector, and is extended to eight dimensions through identity encoding. The diffuse vector and the specular vector at the geometrical vertex are both three-dimensional vectors, and are not encoded. After processing is performed in the foregoing manner, 62-dimensional geometry information is obtained, and is then supplemented to 64 dimensions by using placeholders. The 64-dimensional geometry information is inputted into the neural network together with the light information for training. Therefore, after the geometry information of the second object vertex is processed in the foregoing manner, the MLP can obtain a better light information extraction effect.

In an embodiment, to further improve real-time performance in the rendering process, structural splitting may be performed on the neural network in advance to obtain at least two sub-networks, and then the at least two sub-networks are trained based on the light information of the second object vertex, to greatly shorten network training time, quickly obtain the at least two trained sub-networks, and combine the at least two trained sub-networks to obtain the trained neural network, so that the requirement on real-time rendering of the to-be-rendered image can be effectively met.

The trained neural network includes the at least two trained sub-networks. The trained sub-network may be a sub-network obtained after training is completed, and may also be referred to as a sub-network obtained through training.

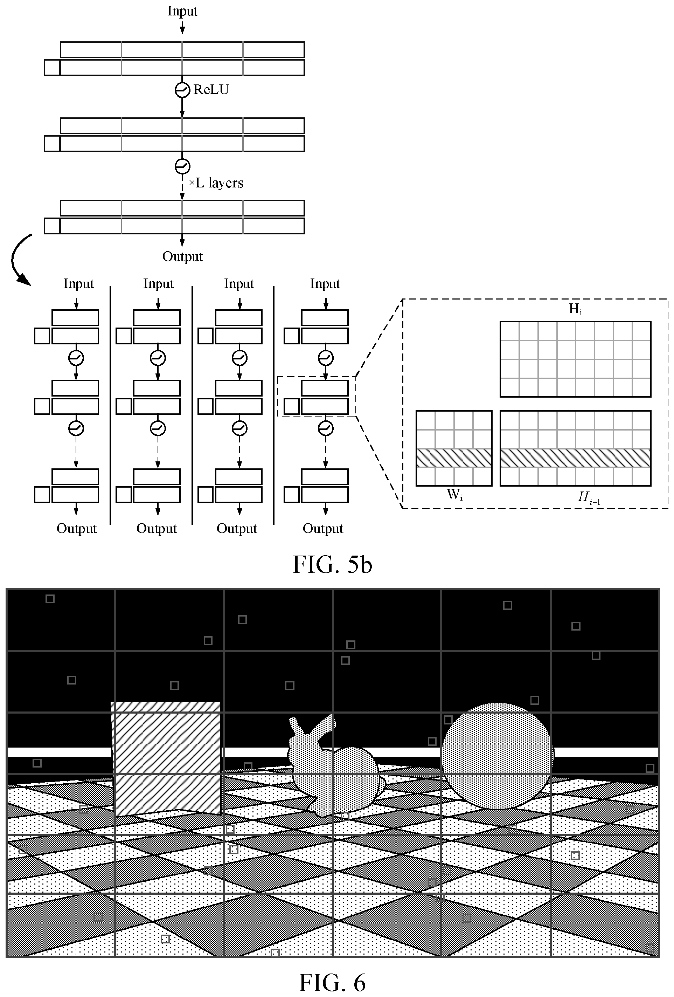

When structural splitting is performed on the neural network, neurons at each network layer in the neural network are classified into a plurality of groups, to obtain a plurality of groups of neurons at each network layer. Then, the groups of neurons at each network layer are combined, to obtain a plurality of sub-networks. For example, the network layer of the neural network includes an input layer, a plurality of hidden layers, and an output layer. Refer to a diagram of a structure at an upper part of FIG. 6. Each network layer of the neural network has a large quantity of neurons. It is assumed that a quantity of neurons at each network layer is N=m×n. In this case, neurons at the input layer, neurons at each hidden layer, and neurons at the output layer may be classified into m groups (that is, the 1^{st} group of neurons to an m^{th} group of neurons), and a quantity of neurons at each group is n. Then, an i^{th} group of neurons at the input layer, an i^{th} group of neurons at each hidden layer, and an i^{th} group of neurons at the output layer are combined until combination between corresponding groups of neurons at each network layer is completed, so that m sub-networks can be obtained. i, m, n, and N are all positive integers, i ≤ N, m < N, and n < N. Structures and calculation manners of the sub-networks are the same. After training is completed, parameter values of the sub-networks may be different. For example, values of a parameter a of a sub-network 1 and a parameter a of a sub-network 2 after training may be different. The term "a plurality of" may be two or more. In addition, the plurality of groups may be two or more groups.

Structural splitting is performed on the neural network in advance to obtain the at least two sub-networks, to reduce a quantity of neurons in the network, effectively reduce inputted and outputted data dimensions, reduce complexity of the entire network, and greatly reduce a calculation amount. In addition, the sub-network obtained through splitting can have a high-performance concurrent processing capability by using a Cuda operator. Therefore, it can be ensured that network training and inference can be performed in real time.

Cuda may be a high-performance computing platform, and allows using a graphics processing unit (GPU) to perform parallel computing, to accelerate a processing speed of a computing task. Correspondingly, the Cuda operator may be an operator that allocates, by using a parallel computing capability of the GPU, the computing task to a plurality of computing units (that is, cores of the Cuda) for execution. For example, light information and geometry information of each second object vertex may be allocated to a corresponding sub-network by using the Cuda operator for parallel processing, to accelerate a training speed of the sub-network.

In an embodiment, there are at least two second object vertexes. Therefore, before training is performed, the terminal may obtain geometry information of the at least two second object vertexes. Then, the terminal inputs the light information and the geometry information of each second object vertex into each sub-network, to enable each sub-network to generate predicted light information of each second object vertex based on the inputted geometry information. The terminal performs parameter optimization on each sub-network based on a loss value between the predicted light information and the light information of each second object vertex. In addition, before inputting the information into the sub-network, the terminal may further encode the geometry information of each second object vertex, to extend a dimension of the geometry information. This helps improve a light information extraction effect of each perceptron in the sub-network. In addition, the neural network is split into a plurality of sub-networks for training, to greatly reduce training time consumption and effectively ensure a requirement on real-time performance.

For example, the terminal may obtain the geometry information including at least one of the position, the surface roughness, the propagation direction of the light ray at the vertex, and the surface normal vector, the diffuse vector, or the specular vector at the vertex, use the geometry information of each second object vertex as training data, use the light information of each second object vertex as a label, and then input the training data and light data into different sub-networks. For example, training data 1 and a label 1 are inputted into a sub-network 1, training data 2 and a label 2 are inputted into a sub-network 2, training data 3 and a label 3 are inputted into a sub-network 3, and training data 4 and a label 4 are inputted into a sub-network 4, as shown in FIG. 5b. Therefore, the sub-network generates the predicted light information of the second object vertex based on the inputted geometry information, calculates a loss value between the predicted light information and the label, and then performs back propagation on the obtained loss value in the sub-network, to implement parameter optimization of the sub-network. In FIG. 5b, *Hᵢ* represents a light feature outputted by an i^{th} perception layer, *Wᵢ* is a learnable matrix parameter configured for processing the light feature outputted by the i^{th} perception layer, and *H*_{*i+*1} *= Wᵢ * Hᵢ.*

In another embodiment, the terminal may divide the rendered image into a plurality of areas, select a plurality of object vertexes in each area, determine, in these object vertexes, the light path of on which the first object vertex is located, continue to screen these vertexes for the second object vertex that meets the light rendering condition, and then obtain the corresponding light information for training. For example, as shown in FIG. 6, the rendered image is divided into different 6×6 grids, a plurality of object vertexes are selected from each grid, then a second object vertex that is on a same light path as a first object vertex meeting the light rendering condition and that meets the light rendering condition is selected, and then light information corresponding to the second object vertex is used for training.

208: Extract light information of object vertexes including the first object vertex in the to-be-rendered image by using the trained neural network, to obtain the light information of the object vertexes.

Extracting the light information of the object vertexes by using the trained neural network may be that the trained neural network performs processing by using geometry information of the object vertexes, to generate the light information of the object vertexes.

In an embodiment, when the neural network is split into the at least two sub-networks for training, to obtain the at least two trained sub-networks, the terminal extracts the light information of the object vertexes including the first object vertex in the to-be-rendered image by using the at least two trained sub-networks, to obtain the light information of the object vertexes. Considering that a quantity of neurons in the trained sub-network is small, and inputted and outputted data dimensions are low, complexity of the network is effectively reduced. Therefore, the light information is extracted by using the trained sub-network, so that light information extraction can be effectively accelerated, and this helps ensure real-time performance of light rendering.

For example, the game scenario is used as an example. The terminal may obtain geometry information of object vertexes corresponding to each game object and each environment object in a to-be-rendered game video frame, and input the geometry information into different trained sub-networks. Refer to FIG. 5b. These trained sub-networks respectively generate light information of the corresponding object vertexes based on the inputted geometry information of the object vertexes.

In an embodiment, when extracting the light information, the terminal may extract light information of each object vertex in the to-be-rendered image with reference to a configured light ray propagation parameter, to control quantities of reflected light, refracted light, and scattered light extraction times, and avoid an excessive calculation amount. Specifically, the terminal may obtain a pre-configured second quantity of light ray reflection times, a pre-configured quantity of light ray refraction times, and a pre-configured quantity of light ray scattering times; and extract the light information of the object vertexes including the first object vertex in the to-be-rendered image based on the second quantity of light ray reflection times, the quantity of light ray refraction times, and the quantity of light ray scattering times. Therefore, quantities of light ray reflection times, light ray refraction times, and light ray scattering times may be controlled when the light information is extracted.

The second quantity of light ray reflection times, the quantity of light ray refraction times, and the quantity of light ray scattering times may be limiting values for reflection, refraction, and scattering of the light ray between surfaces of objects during real-time inference of the neural network. The values are configured for controlling time at which reflection, refraction, and scattering of the light ray stop. In addition, the light information includes direct light information, reflected light information, refracted light information, and scattered light information.

210: Perform light rendering on the to-be-rendered image based on the light information of the object vertexes.

The light rendering may be a behavior of performing real-time rendering to obtain a light effect. In addition, real-time rendering is a rendering method for obtaining a display image in limited time in computer graphics, and is aimed at generating a display image with a good visual effect in shortest possible time, to improve image smoothness in interactive applications (such as a game application, a virtual reality application, and an augmented reality application).

In an embodiment, the terminal may perform light rendering on each object in the to-be-rendered image by using a light rendering function (for example, a spherical harmonic function) based on the light information of each object vertex, to obtain a rendering result of global light of each object. Because the light information is generated by using the neural network (or the sub-network of the neural network), complex integral calculation in conventional path tracing is avoided, and a calculation amount is reduced, so that a rendering speed can be effectively reduced, and a requirement on the real-time performance of rendering is ensured.

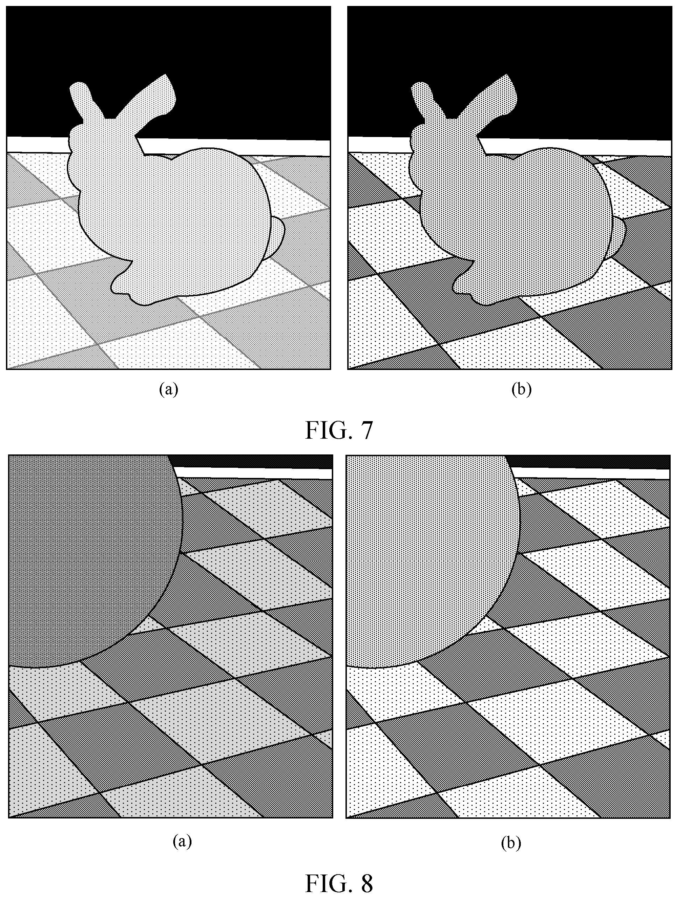

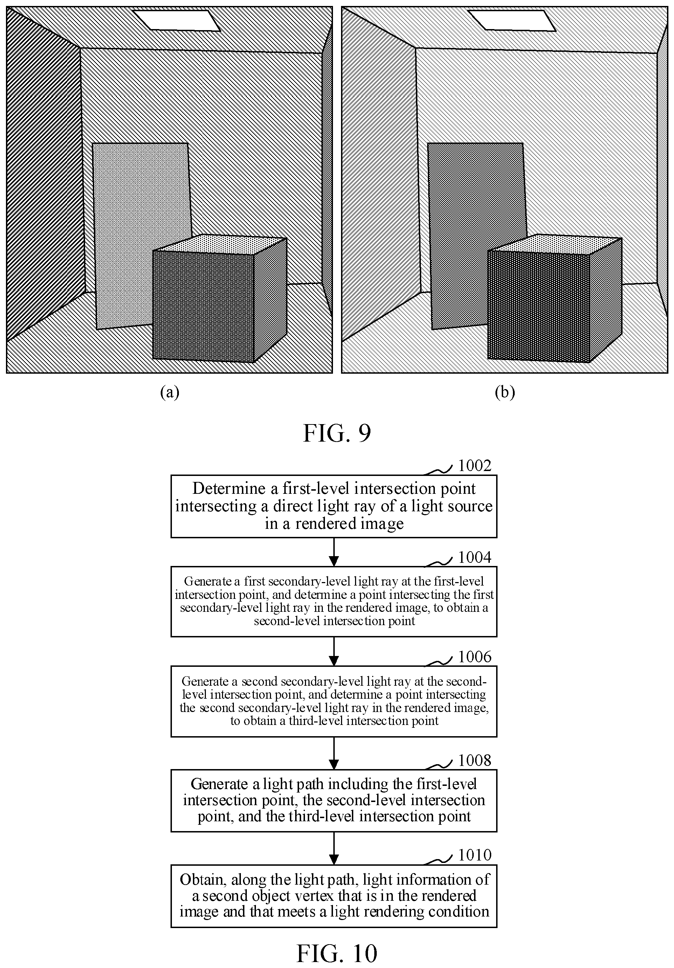

For light rendering in a conventional solution, cached light information is usually obtained by using a radiance cache technology, and then light rendering is performed by using the cached light information. In some application scenarios, because a position and a posture of each object dynamically change, or a viewing angle during image display dynamically changes, light information on a surface of the object also dynamically changes. In this case, performing light rendering by using the cached light information may cause a poor light rendering effect, as shown in (a) in FIG. 7, (a) in FIG. 8, and (a) in FIG. 9. However, the light rendering effect may be effectively improved by using the light rendering solution of this application, as shown in (b) in FIG. 7, (b) in FIG. 8, and (b) in FIG. 9. The radiance cache is a technology configured for improving global light calculation efficiency in computer graphics, and a core idea thereof is to pre-cache pre-calculated light information, so as to quickly query and use the cached light information as required.

In the foregoing embodiment, before light rendering is performed on the to-be-rendered image, light effect detection is first performed on the rendered image. When it is detected that the first object vertex that does not meet the light rendering condition exists in the rendered image, the light information of the second object vertex that is on the same light path as the first object vertex and that meets the light rendering condition is obtained. The obtained light information is used to train the neural network, so that the neural network can learn to extract the light information that is of the first object vertex and that meets the light rendering condition. Therefore, even if the object or the viewing angle in the scenario dynamically changes, the trained neural network can also extract the light information that meets the light rendering condition, and the light rendering effect of the to-be-rendered image can be effectively improved by using the light information. In addition, the neural network needs to be trained by using only the light information of the second object vertex that is on the same light path as the first object vertex and that meets the light rendering condition, so that a training speed can be effectively increased, and the requirement on the real-time performance of light rendering can be met.

In an embodiment, the terminal may determine, in the rendered image, the light path on which the first object vertex is located; and then obtain, along the light path on which the first object vertex is located, the light information of the second object vertex that is in the rendered image and that meets the light rendering condition.

In another embodiment, the first object vertex includes a first-level intersection point, a second-level intersection point, and a third-level intersection point. Therefore, for an operation of obtaining the light information of the second object vertex, refer to 10. Specific operations include:

S1002: Determine the first-level intersection point intersecting a direct light ray of a light source in the rendered image.

The first-level intersection point may be a vertex when the direct light ray of the light source intersects an object, for example, a point at which a light ray (namely, the direct light ray) directly emitted by the light source intersects a game object a in the game scenario, and the intersection point is the first-level intersection point. That the direct light ray of the light source intersects the game object a in the game scenario may indicate that the direct light ray of the light source shines on the game object a.

S1004: Generate a first secondary-level light ray at the first-level intersection point, and determine a point intersecting the first secondary-level light ray in the rendered image, to obtain the second-level intersection point.

The first secondary-level light ray may be a light ray generated when the direct light ray of the light source undergoes at least one light phenomenon of reflection, refraction, or scattering after the direct light ray shines on the object. For example, when the direct light ray of the light source shines on the game object a in the game scenario, an emission phenomenon of the direct light ray occurs on the game object a. In this case, a reflected light ray is generated, and the reflected light ray is the first secondary-level light ray.

The second-level intersection point is a vertex when the first secondary-level light ray intersects an object. For example, the first secondary-level light ray intersects another game object (for example, a game object b) in the game scenario, and an intersection point is the second-level intersection point.

S1006: Generate a second secondary-level light ray at the second-level intersection point, and determine a point intersecting the second secondary-level light ray in the rendered image, to obtain the third-level intersection point.

The second secondary-level light ray may be a light ray generated when the first secondary-level light ray undergoes at least one light phenomenon of reflection, refraction, or scattering after the first secondary-level light ray shines on the object. For example, when the first secondary-level light ray shines on the game object b in the game scenario, an emission phenomenon of the first secondary-level light ray occurs on the game object b. In this case, a reflected light ray is generated, and the reflected light ray is the second secondary-level light ray.

The third-level intersection point is a vertex when the second secondary-level light ray intersects an object. For example, the second secondary-level light ray intersects another game object (for example, a game object c) in the game scenario, and an intersection point is the third-level intersection point.

S1008: Generate a light path including the first-level intersection point, the second-level intersection point, and the third-level intersection point.

In addition to including the first-level intersection point, the second-level intersection point, and the third-level intersection point, the light path may further include another object node.

For example, when a primary light ray (that is, the direct light ray of the light source) intersects an object 1 in a scenario, the first-level intersection point is obtained. In this case, light information of the first-level intersection point may further be calculated. The light information includes direct light information from the light source, and reflected light information, refracted light information, and scattered light information on a surface of the object. Then, one or more secondary-level light rays are generated at the first-level intersection point, and the light ray continues to pass through the scenario along a random direction. When the light ray intersects an object 2 in the scenario, the second-level intersection point is obtained. In this case, light information of the second-level intersection point may further be calculated. The rest is deduced by analogy, and the secondary-level light ray is recursively traced until a predetermined maximum depth is reached or the light ray is absorbed, so that the light path including the first-level intersection point, the second-level intersection point, and the third-level intersection point is obtained. The foregoing scenario may be the game scenario, the virtual reality scenario, the augmented reality scenario, or the like.

In an embodiment, the light path may include an initial path and an extended path. Therefore, in a process of generating the light path, the terminal may generate the initial path based on the first-level intersection point, the second-level intersection point, and the third-level intersection point; and perform path extension on the initial light path, to obtain an extended path. In the foregoing solution, the first-level intersection point, the second-level intersection point, and the third-level intersection point that do not meet the light rendering condition are first searched in a segmentation manner, and then path extension is performed on the initial path including the first-level intersection point, the second-level intersection point, and the third-level intersection point, so that the extended path including an object node that meets the light rendering condition can be found. In this way, the object node that meets the light rendering condition can be distinguished from an object node that does not meet the light rendering condition, to accurately and quickly find light information of the object node that meets the light rendering condition.

For example, the foregoing example continues to be used for description. After the initial path including the first-level intersection point, the second-level intersection point, and the third-level intersection point is obtained, one or more secondary-level light rays are generated at the third-level intersection point, and the light ray continues to pass through the scenario along a random direction. When the light ray intersects another object in the scenario, a fourth-level intersection point is obtained. In this case, light information of the fourth-level intersection point may further be calculated. The rest is deduced by analogy, and the secondary-level light ray is recursively traced until a predetermined maximum depth is reached or the light ray is absorbed, so that the extended path is obtained.

S1010: Obtain, along the light path, the light information of the second object vertex that is in the rendered image and that meets the light rendering condition.

In an embodiment, the terminal may first obtain a pre-configured first quantity of light ray reflection times; and determine a vertex search quantity based on the first quantity of light ray reflection times and the quantity of first object vertexes. Therefore, when the light information is searched for, the second object vertex that is in the rendered image and that meets the light rendering condition may be searched for along the light path based on the vertex search quantity, so that the quantity of reflected light extraction times can be controlled, and the excessive calculation amount is avoided. This can help increase the network training speed, and better meet the requirement on the real-time performance of rendering.

The first quantity of light ray reflection times may be a limiting value for reflection of the light ray between the surfaces of the objects during real-time training of the neural network, and the value is configured for controlling time at which reflection of the light ray stops. The first quantity of light ray reflection times may be pre-configured by a user based on an actual situation. For example, when the user requires priority to image quality, a large first quantity of light ray reflection times may be configured. That is, a larger first quantity of light ray reflection times indicates higher image quality. For another example, when the user requires priority to smoothness, a small first quantity of light ray reflection times can be configured. That is, a smaller first quantity of light ray reflection times indicates higher image smoothness.

For example, for the game scenario, the terminal may first obtain a quantity of light ray reflection times pre-configured by the user on a game configuration page, and use a difference between the first quantity of light ray reflection times and the quantity of first object vertexes as the vertex search quantity. Therefore, when the light information is searched for, light information of a second object vertex that is in a rendered game video frame and that meets the light rendering condition is obtained based on the vertex search quantity, so that a quantity of reflected light extraction times in a game process can be controlled, and the excessive calculation amount is avoided. This can help increase the network training speed, and better meet a requirement on real-time performance of a game.

In an embodiment, considering that the light path may include the initial path and the extended path, the initial path includes the first-level intersection point, the second-level intersection point, and the third-level intersection point, and the extended path is a path extended based on the initial path, when searching for the light information, the terminal may obtain, along the extended path, the light information of the second object vertex that is in the rendered image and that meets the light rendering condition. The object node that meets the light rendering condition is distinguished from the object node that does not meet the light rendering condition, so that the light information of the object node that meets the light rendering condition can be accurately and quickly found.

In the foregoing embodiment, the first object vertex that does not meet the light rendering condition is found in a path tracing manner, and light information of a first object vertex that meets the light rendering condition is obtained on the light path on which the first object vertex is located, so that a complex light effect can be simulated more accurately, for example, a soft shadow, indirect light, diffuse reflection, transparency, and the like can be simulated accurately, to obtain light information that is accurate and that meets the light rendering condition.

In an embodiment, before light rendering is performed, a related light rendering parameter may be configured. During light rendering, the light information may be extracted and light rendering may be performed based on the configured light rendering parameter. This helps improve the rendering effect and meet image quality or smoothness requirements of different users. Specifically, the terminal may display a configuration page of the interactive application; configure a quantity of light ray reflection times on the configuration page in response to a first configuration operation triggered on the configuration page, the quantity of light ray reflection times including the first quantity of light ray reflection times and another quantity of light ray reflection times; and configure a radiance cache on/off state on the configuration page in response to a second configuration operation triggered on the configuration page.

The interactive application may be a game application, a video application (for example, a video application that can live stream games), a virtual fitting application, or another application program related to light rendering. The quantity of light ray reflection times may be configured for controlling time at which reflection of the light ray stops, for example, may be a limiting value for reflection of the light ray between the surfaces of the objects during training or real-time inference of the neural network. The value is configured for controlling the time at which reflection of the light ray stops, and may include the first quantity of light ray reflection times and another quantity of light ray reflection times. The first quantity of light ray reflection times may be a limiting value for reflection of the light ray between the surfaces of the objects during real-time training of the neural network, and may be configured for controlling the time at which reflection of the light ray stops. The another quantity of light ray reflection times may be the second quantity of light ray reflection times, and may be configured for controlling the time at which reflection of the light ray stops during real-time inference of the neural network.

The radiance cache on/off state may be an NRC on/off state. The NRC is a new method for caching a radiance based on the neural network. The neural network is trained by using path tracing data, to predict the radiance at any position in a three-dimensional (3D) scenario. When the radiance cache is in an on state, light rendering is performed in a radiance cache manner, that is, light rendering is performed in the manner of this application. For example, light effect detection is first performed on the rendered image, then whether the neural network needs to be trained is determined based on a detection result, to generate the light information of each object vertex in the to-be-rendered image by using the neural network, and finally light rendering is performed on the to-be-rendered image by using the light information.

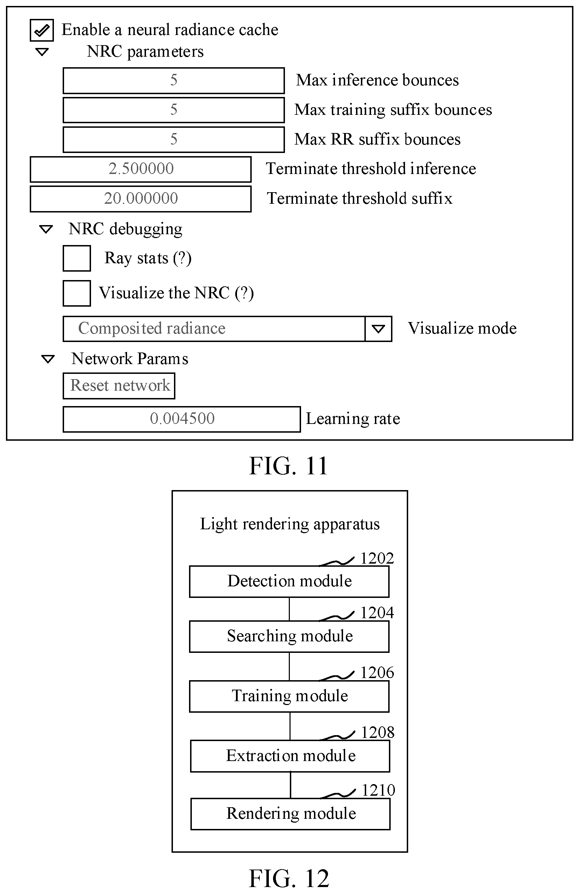

In addition, another light rendering parameter may further be configured in the configuration page. For example, a parameter (for example, Ray stats) indicating whether to display light ray information of a current pixel, a parameter (for example, Visualize NRC) indicating whether to synthesize the current pixel in the radiance cache manner, a parameter in a reset neural network (which may be set by using a reset network button), and a learning rate of the neural network are configured, as shown in FIG. 11. The parameters in FIG. 11 are described herein, and details are as follows.

Enabling the NRC indicates turning on or turning off the NRC, and is configured for controlling a light rendering manner of whether to turn on the NRC.

Max inference bounces indicate maximum quantities of reflection times, refraction times, and scattering times of the light ray between the surfaces of the objects in the scenario during real-time inference of the neural network.

Max training suffix bounces indicate maximum quantities of reflection times, refraction times, and scattering times of the light ray between the surfaces of the objects in the scenario during training of the neural network.

Max RR suffix bounces indicate a maximum quantity of times for which the light ray is allowed to bounce between the surfaces of the objects in the scenario when path tracing is performed and after an RR roulette wheel technology is applied.

A terminate threshold inference is a limiting value for reflection of the light ray during real-time inference of the neural network, and the value is configured for controlling time at which reflection of the light ray stops.

A terminate threshold suffix is a limiting value for reflection of the light ray during training of the neural network, and the value is configured for controlling time at which reflection of the light ray stops.

Ray stats indicates whether to display the light ray information of the current pixel, and if ray stats is checked, the light ray information of the current pixel is displayed. Otherwise, the light ray information of the current pixel is not displayed.

Visualizing the NRC indicates whether rendering is performed in the NRC manner when the current pixel is rendered.

A visualize mode check box provides a bias of radiance mode in which only an original path tracing result is displayed and a composited radiance mode in which a final NRC result is displayed.

A reset network button in Network Params may reset a parameter in the neural network.

A learning rate in Network Params is the learning rate of the neural network.

Operations in flowcharts involved in the foregoing embodiments are shown sequentially based on indication of arrows, but the operations are not necessarily performed sequentially based on a sequence indicated by the arrows. Unless otherwise explicitly specified in this specification, execution of the operations is not strictly limited in the sequence, and the operations may be performed in other sequences. Moreover, at least some of the operations in the flowcharts involved in the foregoing embodiments may include a plurality of operations or a plurality of stages. These operations or stages are not necessarily performed at the same time, but may be performed at different moments. These operations or stages are not necessarily performed in sequence, but may be performed in turn or in alternation with other operations or at least some of the operations or stages in other operations.

Based on a same inventive concept, an embodiment of this application further provides a light rendering apparatus, configured to implement the foregoing light rendering method. An implementation solution provided by the apparatus for resolving problems is similar to the implementation solution recorded in the foregoing method. Therefore, for specific limitations on one or more light rendering apparatus embodiments provided below, refer to the limitations on the foregoing light rendering method. Details are not described herein again.

In an embodiment, as shown in FIG. 12, a light rendering apparatus is provided, including a detection module 1202, a searching module 1204, a training module 1206, an extraction module 1208, and a rendering module 1210.

The detection module 1202 is configured to: before performing light rendering on a to-be-rendered image, perform light effect detection on a rendered image, to obtain a detection result, the rendered image being a previous image frame of the to-be-rendered image.

The searching module 1204 is configured to: in response to the detection result indicating that a first object vertex that does not meet a light rendering condition exists in the rendered image, obtain, along a light path on which the first object vertex is located, light information of a second object vertex that is in the rendered image and that meets the light rendering condition.

The training module 1206 is configured to train a neural network using the light information of the second object vertex, to obtain a trained neural network.

The extraction module 1208 is configured to extract light information of object vertexes including the first object vertex in the to-be-rendered image by using the trained neural network, to obtain the light information of the object vertexes.

The rendering module 1210 is configured to perform light rendering on the to-be-rendered image based on the light information of the object vertexes.

In the foregoing embodiment, before light rendering is performed on the to-be-rendered image, light effect detection is first performed on the rendered image. When it is detected that the first object vertex that does not meet the light rendering condition exists in the rendered image, the light information of the second object vertex that is on the same light path as the first object vertex and that meets the light rendering condition is obtained. The obtained light information is used to train the neural network, so that the neural network can learn to extract light information that is of the first object vertex and that meets the light rendering condition. Therefore, even if an object or a viewing angle in a scenario dynamically changes, the trained neural network may also extract the light information that meets the light rendering condition, and a light rendering effect of the to-be-rendered image can be effectively improved by using the light information. In addition, the neural network needs to be trained by using only the light information of the second object vertex that is on the same light path as the first object vertex and that meets the light rendering condition, so that a training speed can be effectively increased, and a requirement on real-time performance of light rendering can be met.

In an embodiment, the first object vertex includes a first-level intersection point, a second-level intersection point, and a third-level intersection point.

The searching module 1204 is further configured to: determine the first-level intersection point intersecting a direct light ray of a light source in the rendered image; generate a first secondary-level light ray at the first-level intersection point, and determine a point intersecting the first secondary-level light ray in the rendered image, to obtain the second-level intersection point; generate a second secondary-level light ray at the second-level intersection point, and determine a point intersecting the second secondary-level light ray in the rendered image, to obtain the third-level intersection point; generate a light path including the first-level intersection point, the second-level intersection point, and the third-level intersection point; and obtain, along the light path, the light information of the second object vertex that is in the rendered image and that meets the light rendering condition.

In an embodiment, the searching module 1204 is further configured to: generate an initial path based on the first-level intersection point, the second-level intersection point, and the third-level intersection point; perform path extension on the initial light path, to obtain an extended path; and search, along the extended path, for the second object vertex that is in the rendered image and that meets the light rendering condition.

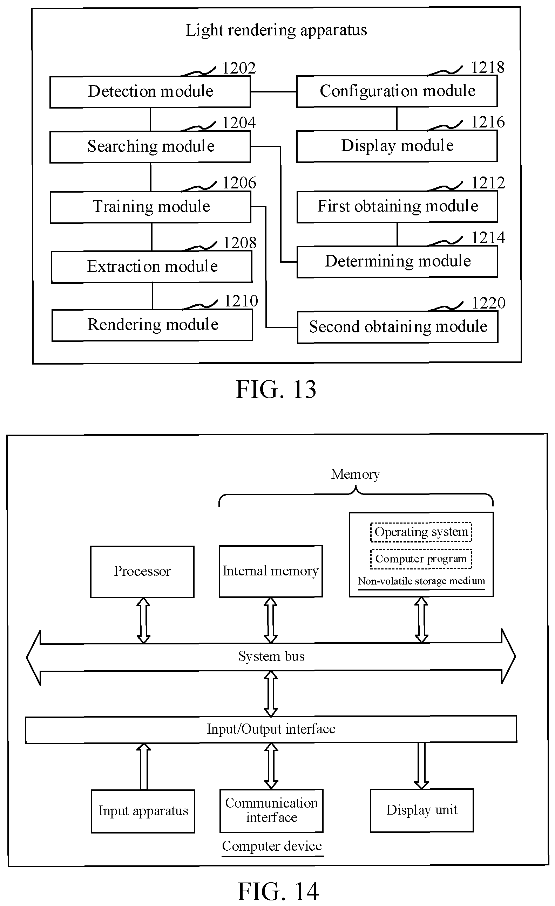

In an embodiment, as shown in FIG. 13, the apparatus further includes:
a first obtaining module 1212, configured to obtain a pre-configured first quantity of light ray reflection times; and
a determining module 1214, configured to determine a vertex search quantity based on the first quantity of light ray reflection times and a quantity of first object vertexes.

The searching module 1204 is further configured to: search, along the light path based on the vertex search quantity, for the second object vertex that is in the rendered image and that meets the light rendering condition.

In an embodiment, as shown in FIG. 13, the apparatus further includes:
a display module 1216, configured to display a configuration page of an interactive application; and
a configuration module 1218, configured to: configure a quantity of light ray reflection times on the configuration page in response to a first configuration operation triggered on the configuration page; and configure a radiance cache on/off state on the configuration page in response to a second configuration operation triggered on the configuration page.

In an embodiment, the detection module 1202 is further configured to: obtain the configured radiance cache on/off state; and when the radiance cache on/off state is a radiance cache on state, perform light effect detection on the rendered image, to obtain the detection result.

The first obtaining module 1212 is further configured to: when the radiance cache on/off state is a radiance cache off state, obtain cached light information of each object vertex in the to-be-rendered image.

The rendering module 1210 is further configured to perform light rendering on the to-be-rendered image based on the cached light information of each object vertex in the to-be-rendered image.

In an embodiment, the extraction module 1208 is further configured to extract the light information of each object vertex in the to-be-rendered image by using the neural network in response to the detection result indicating that all object vertexes in the rendered image meet the light rendering condition.

The rendering module 1210 is further configured to perform light rendering on the to-be-rendered image based on the light information of each object vertex in the to-be-rendered image.

In an embodiment, the rendering module 1210 is further configured to train at least two sub-networks based on the light information of the second object vertex, to obtain at least two trained sub-networks, the at least two sub-networks being obtained by performing structural splitting on the neural network.

In an embodiment, there are at least two second object vertexes. As shown in FIG. 13, the apparatus further includes:
a second obtaining module 1220, configured to obtain geometry information of the at least two second object vertexes.

The training module 1206 is further configured to: input light information and geometry information of each second object vertex into each sub-network, to enable each sub-network to generate predicted light information of each second object vertex based on the inputted geometry information; and perform parameter optimization on each sub-network based on a loss value between the predicted light information and the light information of each second object vertex.

In an embodiment, the extraction module 1208 is further configured to: obtain a pre-configured second quantity of light ray reflection times, a pre-configured quantity of light ray refraction times, and a pre-configured quantity of light ray scattering times; and extract the light information of the object vertexes including the first object vertex in the to-be-rendered image based on the second quantity of light ray reflection times, the quantity of light ray refraction times, and the quantity of light ray scattering times, the light information including direct light information, reflected light information, refracted light information, and scattered light information.

In the foregoing embodiment, the first object vertex that does not meet the light rendering condition is found in a path tracing manner, and light information of a first object vertex that meets the light rendering condition is obtained on the light path on which the first object vertex is located, so that a complex light effect can be simulated more accurately, for example, a soft shadow, indirect light, diffuse reflection, transparency, and the like can be simulated accurately.

Various modules in the foregoing light rendering apparatus may be implemented completely or partially by using software, hardware, or a combination thereof. The foregoing modules may be embedded in or independent of a processor in a computer device in a form of hardware, or may be stored in a memory in a computer device in a form of software, so that the processor invokes and executes operations corresponding to the modules.

In an embodiment, a computer device is provided. The computer device may be a terminal or a server. An example in which the computer device is the terminal is used for description, and a diagram of an internal structure of the terminal may be shown in FIG. 14. The computer device includes a processor, a memory, an input/output interface, a communication interface, a display unit, and an input apparatus. The processor, the memory and the input/output interface are connected through a system bus. The communication interface, the display unit and the input apparatus are connected to the system bus through the input/output interface. The processor of the computer device is configured to provide calculation and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is configured to exchange information between the processor and an external device. The communication interface of the computer device is configured to communicate with an external terminal in a wired or wireless manner. The wireless manner may be implemented through Wi-Fi, a mobile cellular network, near field communication (NFC), or another technology. The computer program, when executed by the processor, implements a light rendering method. The display unit of the computer device is configured to form a visually visible picture, and may be a display screen, a projection apparatus, or a virtual reality imaging apparatus. The display screen may be a liquid crystal display screen or an electronic-ink display screen. The input apparatus of the computer device may be a touch layer covering the display screen, or may be a key, a trackball, or a touch pad arranged on a housing of the computer device, or may be an external keyboard, touch pad, mouse, or the like.

A person skilled in the art may understand that the structure shown in FIG. 14 is merely a block diagram of a partial structure related to the solution in this application, and does not constitute a limitation on the computer device to which the solution in this application is applied. Specifically, the computer device may include more or fewer components than those shown in the figure, or some components may be combined, or a different component layout may be used.

In an embodiment, a computer device is provided, including a memory and a processor, the memory having a computer program stored therein, and the processor implementing operations of the light rendering method when executing the computer program.

In an embodiment, a computer-readable storage medium is provided, having a computer program stored therein, and operations of the light rendering method are implemented when the computer program is executed by a processor.

In an embodiment, a computer program product is provided, including a computer program, and operations of the light rendering method are implemented when the computer program is executed by a processor.

User information (including, but not limited to, user equipment information, user personal information, and the like) and data (including, but not limited to, data for analysis, stored data, displayed data, and the like) involved in this application are both information and data that are authorized by a user or fully authorized by all parties. Collection, use, and processing of related data need to comply with relevant laws and regulations of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a database, or other media used in all embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may include a random access memory (RAM), an external cache, or the like. For the purpose of illustration rather than limitation, the RAM may be in various forms, such as a static random access memory (SRAM), a dynamic random access memory (DRAM), or the like. The database involved in all embodiments provided in this application may include at least one of a relational database and a non-relational database. The non-relational database may include, but is not limited to, a distributed database based on a block chain, or the like. The processor involved in all embodiments provided in this application may be, but is not limited to, a general-purpose processor, a central processing unit, a graphics processing unit, a digital signal processor, a programmable logic, a data processing logic based on quantum computing, or the like.

The technical features in the foregoing embodiments may be combined in any manner. To make the description brief, not all possible combinations of the technical features in the foregoing embodiments are described. However, provided that the combinations of the technical features do not conflict with each other, it should be considered as the scope recorded in this specification.

The foregoing embodiments show only several implementations of this application and are described in detail, which, however, are not to be construed as a limitation on the patent scope of this application. For a person of ordinary skill in the art, several transformations and improvements can be made without departing from the idea of this application. These transformations and improvements belong to the protection scope of this application. Therefore, the protection scope of this application shall be subject to the appended claims.

## Claims

1. A light rendering method, executable by a computer device, the method comprising:
before performing light rendering on a to-be-rendered image, performing light effect detection on a rendered image, to obtain a detection result, the rendered image being a previous image frame of the to-be-rendered image;
in response to the detection result indicating that a first object vertex that does not meet a light rendering condition exists in the rendered image, obtaining, along a light path on which the first object vertex is located, light information of a second object vertex that is in the rendered image and that meets the light rendering condition;
training a neural network using the light information of the second object vertex, to obtain a trained neural network;
extracting light information of object vertexes comprising the first object vertex in the to-be-rendered image by using the trained neural network, to obtain the light information of the object vertexes; and
performing light rendering on the to-be-rendered image based on the light information of the object vertexes.

2. The method according to claim 1, wherein the first object vertex comprises a first-level intersection point, a second-level intersection point, and a third-level intersection point; and the obtaining, along a light path on which the first object vertex is located, light information of a second object vertex that is in the rendered image and that meets the light rendering condition comprises:
determining the first-level intersection point intersecting a direct light ray of a light source in the rendered image;
generating a first secondary-level light ray at the first-level intersection point, and determining a point intersecting the first secondary-level light ray in the rendered image, to obtain the second-level intersection point;
generating a second secondary-level light ray at the second-level intersection point, and determining a point intersecting the second secondary-level light ray in the rendered image, to obtain the third-level intersection point;
generating a light path comprising the first-level intersection point, the second-level intersection point, and the third-level intersection point; and
obtaining, along the light path, the light information of the second object vertex that is in the rendered image and that meets the light rendering condition.

3. The method according to claim 2, wherein the light path comprises an initial path and an extended path; and the generating a light path comprising the first-level intersection point, the second-level intersection point, and the third-level intersection point comprises:
generating the initial path based on the first-level intersection point, the second-level intersection point, and the third-level intersection point; and
performing path extension on the initial light path, to obtain the extended path; and
searching, along the light path, for the second object vertex that is in the rendered image and that meets the light rendering condition comprises:
searching, along the extended path, for the second object vertex that is in the rendered image and that meets the light rendering condition.

4. The method according to claim 2 or 3, wherein the method further comprises:
obtaining a pre-configured first quantity of light ray reflection times; and
determining a vertex search quantity based on the first quantity of light ray reflection times and a quantity of first object vertexes; and
the searching, along the light path, for the second object vertex that is in the rendered image and that meets the light rendering condition comprises:
searching, along the light path based on the vertex search quantity, for the second object vertex that is in the rendered image and that meets the light rendering condition.

5. The method according to claim 4, wherein the method further comprises:
displaying a configuration page of an interactive application;
configuring a quantity of light ray reflection times on the configuration page in response to a first configuration operation triggered on the configuration page, the quantity of light ray reflection times comprising the first quantity of light ray reflection times and another quantity of light ray reflection times; and
configuring a radiance cache on/off state on the configuration page in response to a second configuration operation triggered on the configuration page.

6. The method according to any one of claims 1 to 5, wherein the performing light effect detection on a rendered image, to obtain a detection result comprises:
obtaining the configured radiance cache on/off state; and
when the radiance cache on/off state is a radiance cache on state, performing light effect detection on the rendered image, to obtain the detection result; and
the method further comprises: when the radiance cache on/off state is a radiance cache off state, obtaining cached light information of each object vertex in the to-be-rendered image; and
performing light rendering on the to-be-rendered image based on the cached light information of each object vertex in the to-be-rendered image.

7. The method according to any one of claims 1 to 5, wherein the method further comprises:
extracting the light information of each object vertex in the to-be-rendered image by using the neural network in response to the detection result indicating that all object vertexes in the rendered image meet the light rendering condition; and
performing light rendering on the to-be-rendered image based on the light information of each object vertex in the to-be-rendered image.

8. The method according to any one of claims 1 to 5, wherein the training a neural network using the light information of the second object vertex, to obtain a trained neural network comprises:
training at least two sub-networks based on the light information of the second object vertex, to obtain at least two trained sub-networks,
the at least two sub-networks being obtained by performing structural splitting on the neural network, and the trained neural network comprising the at least two trained sub-networks.

9. The method according to claim 8, wherein there are at least two second object vertexes, and the method further comprises:
obtaining geometry information of the at least two second object vertexes; and
the training at least two sub-networks based on the light information of the second object vertex comprises:
inputting light information and geometry information of each second object vertex into each sub-network, to enable each sub-network to generate predicted light information of each second object vertex based on the inputted geometry information; and
performing parameter optimization on each sub-network based on a loss value between the predicted light information and the light information of each second object vertex.

10. The method according to any one of claims 1 to 9, wherein the extracting light information of object vertexes comprising the first object vertex in the to-be-rendered image comprises:
obtaining a pre-configured second quantity of light ray reflection times, a pre-configured quantity of light ray refraction times, and a pre-configured quantity of light ray scattering times; and
extracting the light information of the object vertexes comprising the first object vertex in the to-be-rendered image based on the second quantity of light ray reflection times, the quantity of light ray refraction times, and the quantity of light ray scattering times,
the light information comprising direct light information, reflected light information, refracted light information, and scattered light information.

11. A light rendering apparatus, the apparatus comprising:
a detection module, configured to: before performing light rendering on a to-be-rendered image, perform light effect detection on a rendered image, to obtain a detection result, the rendered image being a previous image frame of the to-be-rendered image;
a searching module, configured to: in response to the detection result indicating that a first object vertex that does not meet a light rendering condition exists in the rendered image, obtain, along a light path on which the first object vertex is located, light information of a second object vertex that is in the rendered image and that meets the light rendering condition;
a training module, configured to train a neural network using the light information of the second object vertex, to obtain a trained neural network;
an extraction module, configured to extract light information of object vertexes comprising the first object vertex in the to-be-rendered image by using the trained neural network, to obtain the light information of the object vertexes; and
a rendering module, configured to perform light rendering on the to-be-rendered image based on the light information of the object vertexes.

12. A computer device, comprising a memory and a processor, the memory having a computer program stored therein, and the processor implementing operations of the method according to any one of claims 1 to 10 when executing the computer program.

13. A computer-readable storage medium, having a computer program stored therein, operations of the method according to any one of claims 1 to 10 being implemented when the computer program is executed by a processor.

14. A computer program product, comprising a computer program, operations of the method according to any one of claims 1 to 10 being implemented when the computer program is executed by a processor.
